# EUROPEAN PATENT APPLICATION

(11) **EP 1 975 327 A1**
(43) Date of publication of application: **01.10.2008**
(21) Application number: 06843289.7
(22) Date of filing: 26.12.2006
(51) Int. Cl.: E03F 3/02, E03F 7/00

(54) **VACUUM FLUID TRANSFER SYSTEM**

(30) Priority: 27.12.2005 JP 2005374046
(71) Applicant: SEKISUI CHEMICAL CO., LTD., Osaka-shi, Osaka 530-8565 (JP)
(72) Inventor: OHTSUKA, Tetsushi, Asaka-shi Saitama 351-8511 (JP)
(74) Representative: Merkle, Gebhard
(86) International application number: PCT/JP2006/325905
(87) International publication number: WO 2007/074818

(57) **Abstract**

A vacuum fluid transfer system transfers a fluid by setting inside of a main pipe line (10) to vacuum and using a pressure difference. The system includes a portion where the main pipe line (10) is horizontally arranged, and is provided with an automatic intake valve (17) and a terminal automatic intake valve (16) for introducing atmosphere into the main pipe line (10) from the outside of the main pipe line (10) when a degree of vacuum inside the main pipe line (10) is reduced to a predetermined value or lower.

## Description

### TECHNICAL FIELD

The present invention relates to a vacuum fluid transfer system which utilizes a pressure difference between an atmospheric pressure and a negative pressure source to collect sewage discharged from individual homes, factories and the like as well as rainwater. More particularly, the present invention relates to a vacuum fluid transfer system suitable for use in the case of a floating cottage or the like where a pipe line is installed horizontally or with an upward gradient.

### (Priority Claim)

This application is based upon and claims priority from Japanese Patent Application No. 2005-374046 filed to Japan Patent Office on December 27, 2005, the content of which is incorporated herein by reference.

### BACKGROUND ART

There has heretofore been known a vacuum sewerage system as a vacuum fluid transfer system as shown in FIG. 16 (see, for example, Japanese Patent Application Laid-Open Publication No. Hei 8-319662 (paragraphs [0018] to [0051] and FIG. 1)).

In such a conventional vacuum sewerage system, sewage 6 as a fluid discharged from a building 1, such as a private house, a collective housing and various facilities, naturally flows down to be temporarily stored in a sewage tank 2, as a collecting tank, having a vacuum valve 3 provided therein.

The vacuum sewerage system is configured to transfer the sewage 6 toward a vacuum pump system 5 in the following manner. Specifically, when the sewage 6 reaches a certain amount in the sewage tank 2, the vacuum valve 3 is released, and thereby the sewage 6 is transferred toward the vacuum pump system 5 by a pressure difference between an atmospheric pressure acting on a surface of the sewage in the sewage tank 2 and a vacuum pressure applied to a vacuum sewage pipe 4 from the vacuum pump system 5.

In such a vacuum sewerage system, the vacuum sewage pipe 4 is mainly formed by alternately placing a downward gradient portion 4a... and a lift portion 4b... so as to be arranged in a continuous sawtooth pattern. Specifically, each of the downward gradient portions 4a has a downward gradient of about 1 to 3 %, and the lift portions 4b are positioned between the downward gradient portions 4a at predetermined intervals, and have upward gradients.

Next, effects achieved in the conventional example will be described.

In the conventional vacuum fluid transfer system thus configured, the amount of the sewage to be transferred is set by controlling release timing of the vacuum valve 3 and the amount of air and also by controlling a lift shape and a lift amount of the lift portions 4b....

Moreover, temporary accumulation of the sewage in the lift portion 4b leads to formation of a "plug". Thus, the swage and passing air form a gas-liquid multiphase flow, which is then transferred toward a downstream side in the vacuum sewage pipe 4.

Specifically, a vacuum pump provided in the vacuum pump system 5 is activated to set the downstream side in a vacuum state with a relatively high degree of vacuum. Accordingly, a pressure difference with an air pressure on an upstream side is utilized to transfer the sewage toward the downstream side through the pipe line of the vacuum sewage pipe 4.

In this event, a flow rate of the air is higher than that of the sewage. Thus, after the air passes through the sewage 6, the sewage 6 flows inside the vacuum sewage pipe 4 according to thrust of the sewage 6 and the gradient of the pipe line.

Thus, the sewage 6 is finally set in a gas-liquid separated state where the air and the sewage 6 are separated from each other, and is accumulated in the next lift portion 4b on the downstream side.

The sewage 6 accumulated in the lift portion 4b forms the so-called "plug". Thus, when air passes, the swage 6 and the passing air form a gas-liquid multiphase flow, which is then transferred over the lift portion 4b toward the downstream side in the vacuum sewage pipe 4, the air being suctioned toward the vacuum pump system 5 by activating any of the vacuum valves 3... on the upstream side.

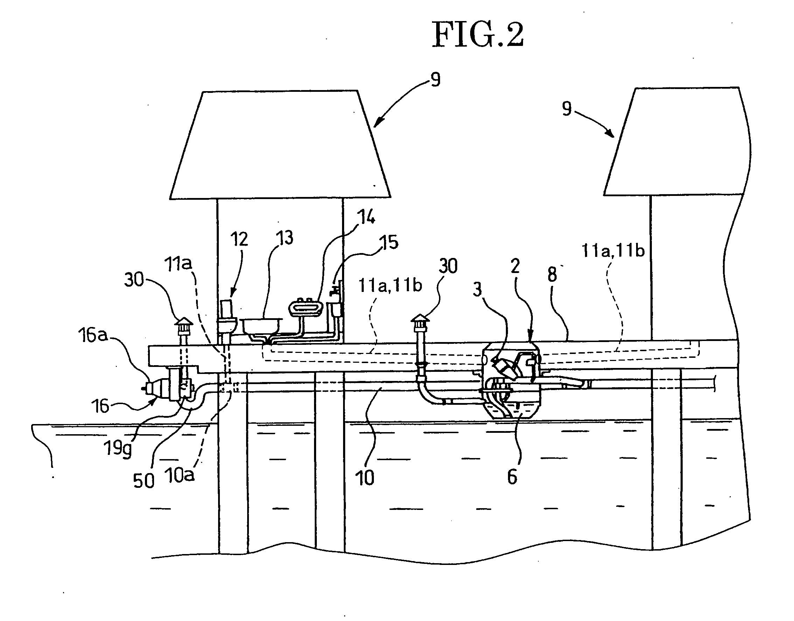

Also known is a vacuum fluid transfer system which reduces a pressure by using an automatic intake system for supply of the atmosphere (see, for example, Japanese Patent Application Laid-open Publication No. 2000-144868 (paragraphs [0021], [0022] and [0041] to [0121] and FIG. 2)).

Moreover, another vacuum fluid transfer system is also known, in which a check valve for allowing an air flow in one direction is provided in an equalizing pipe provided separately from the vacuum sewage pipe 4 (see, for example, Japanese Patent Application Laid-open Publication No. 2002-180527 (paragraph [0020] and FIG. 1)).

Furthermore, still another system is also known, in which pocket portions equivalent to the lift portions 4b... for forming the "plugs" are formed in the vacuum sewage pipe 4 (see, for example, Japanese Patent Application Laid-Open Publication No. Hei 11-222908 (paragraphs [0013] to [0020] and FIG. 1)).

However, in the conventional vacuum fluid transfer systems as described above, the amount of the sewage to be transferred is set by controlling release timing of the vacuum valve 3 and the amount of air and also by controlling a lift shape and a lift amount of the lift portions 4b....

Moreover, it is required to set the lift shape and lift amount of the lift portions 4b...so as not to cause a so-called air lock (water block) which makes it impossible to obtain a desired degree of vacuum due to accumulation of the sewage inside the pipe line. Thus, designing is complicated, and it is far from easy to undertake construction.

Furthermore, the sewage 6 accumulated in the lift portion 4b forms the so-called "plug", and is intermittently transferred as a gas-liquid multiphase flow, by activating any of the vacuum valves 3... on the upstream side, so as to pass through the lift portion 4b and to reach the next lift portion 4b.

Thus, in order to form a plurality of "plugs" by use of the lift portions 4b, it is certainly required to construct multistage lift pipe arrangement having a sawtooth pattern by combining the downward gradient portions 4a.

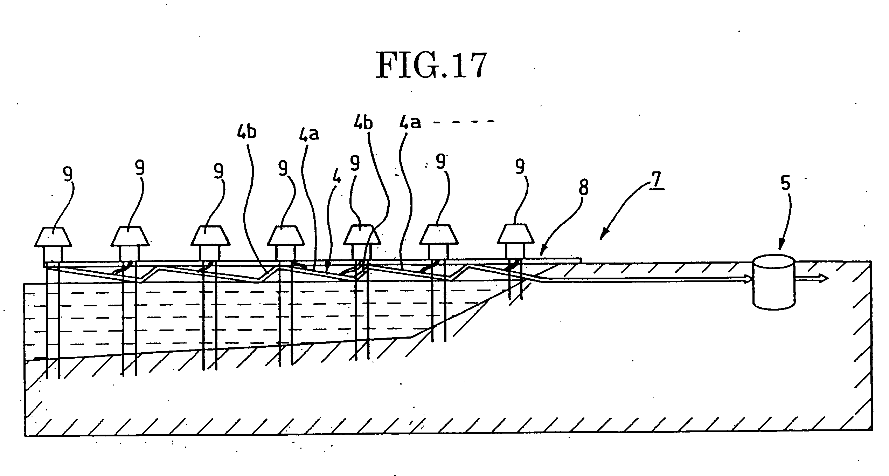

Accordingly, when trying to apply the vacuum fluid transfer system to a sewage collection system for buildings, such as a plurality of floating cottages 9... on a pier 8 built at a waterside 7 as shown in FIG. 17, it is difficult to undertake construction by setting desired lift shape and lift amount below the pier 8 having a limited installation space in a height direction.
Moreover, a horizontal piping system as heretofore devised in which horizontal pipes and pockets for gas-liquid mixing are simply formed is a system depending only on vacuum valves for inflow of air. Thus, not only can a design piping length not be extended but it is also very difficult to release the air lock once the air lock has occurred. Thus, there is a risk that the system cannot be operated as a stable system.

Consequently, it is an object of the present invention to provide a vacuum fluid transfer system which has improved flexibility of an installation site, and which achieves highly efficient fluid transfer by making it possible to automatically release an air lock even when the air lock occurs and to form horizontal pipe arrangement.

### DISCLOSURE OF THE INVENTION

In order to achieve the foregoing object, a first aspect of the present invention provides a vacuum fluid transfer system which transfers a fluid using a pressure difference obtained by setting inside of a pipe line to vacuum. The pipe line includes a horizontally arranged portion, and the system includes an automatic suction device for introducing atmosphere into the pipe line from outside of the pipe line when a degree of vacuum inside the pipe line is reduced to not higher than a predetermined value.

Here, the horizontally arranged portion also includes a slightly upward or downward gradient and a composite pipe having a combined gradient thereof, and includes an upward or downward gradient of about 1 to 3 % which does not impair installation space efficiency of an installation site.

Moreover, the pipe line may have any of the following three arrangement patterns: one including a horizontal portion, an upward gradient portion and a horizontal portion; one including a horizontal portion, a downward gradient portion and a horizontal portion; and one including a horizontal portion. Alternatively, the pipe line may have a combined arrangement pattern of the above three arrangement patterns.

As a second aspect of the present invention, a collecting tank is connected to a part of the pipe line, and has a vacuum valve provided therein, which is opened to introduce the atmosphere when a fluid stored in the collecting tank reaches a certain amount and thus transfers the fluid in the collecting tank through the pipe line.

As a third aspect of the present invention, a fluid accumulation part is provided, in which the fluid is accumulated by reduction in the degree of vacuum inside the pipe line, and a downstream side of the automatic suction device is positioned in the fluid accumulation part.

As a fourth aspect of the present invention, the fluid accumulation part is provided in a branch pipe, which is branched off downward from the pipe line.

As a fifth aspect of the present invention, the branch pipe is provided in a Y-shaped pipe part having a branch pipe line which is branched off obliquely downward from the pipe line, and which is connected at an acute angle to the pipe line so as to allow a merging direction to follow a fluid passing direction in the pipe line.

As a sixth aspect of the present invention, the fluid accumulation part is formed of a pipe line including a horizontal portion, an upward gradient portion, a horizontal portion, a downward gradient portion and a horizontal portion, all of which are continuously provided.

As a seventh aspect of the present invention, the fluid accumulation part is a pocket part formed inside the pipe line by setting the pipe line to be convex downward.

As an eighth aspect of the present invention, the fluid accumulation part is formed by partially reducing a diameter of the pipe line.

As a ninth aspect of the present invention, a check valve is provided in a part of the pipe line, and the check valve is positioned on the downstream side of the automatic suction device to prevent a backflow of the fluid by blocking the pipe line even if an inversion phenomenon occurs, in which the degree of vacuum on the downstream side is reduced, and in which a degree of vacuum on an upstream side is increased.

As a tenth aspect of the present invention, the automatic suction device is provided at an end portion on an uppermost stream side of the pipe line.

### BRIEF DESCRIPTION OF THE DRAWINGS

FIG. 1 is a schematic longitudinal cross-sectional view of a waterside for showing an entire structure of a floating cottage to which a vacuum fluid transfer system of Example 1 according to an embodiment of the present invention is applied.
FIG. 2 is a partially enlarged side view showing a portion of a pier most distant from land in the vacuum fluid transfer system of Example 1.
FIG. 3 is a partially enlarged side view of the pier for showing a conFIGuration of a main part in the vacuum fluid transfer system of Example 1.
FIG. 4 is a longitudinal cross-sectional view of an automatic intake valve used in the vacuum fluid transfer system of Example 1, showing a state where a valve body thereof is closed.
FIG. 5 is a longitudinal cross-sectional view of the automatic intake valve used in the vacuum fluid transfer system of Example 1, showing a state where the valve body thereof is opened.
FIG. 6 is a partial cross-sectional view showing a closed state of the automatic intake valve used in the vacuum fluid transfer system of Example 1.
FIG. 7 is a partial cross-sectional view showing an opened state of the automatic intake valve used in the vacuum fluid transfer system of Example 1.
FIG. 8 is a partial cross-sectional view showing a situation where the atmosphere is introduced by opening the automatic intake valve used in the vacuum fluid transfer system of Example 1, thereby transferring sewage, and then a diaphragm is pulled down again.
FIG. 9 is a partial cross-sectional view showing another example of horizontal pipe arrangement in a vacuum fluid transfer system of Example 2 according to the embodiment of the present invention.
FIG. 10 is a partially enlarged cross-sectional view showing a structure of a main portion of a fluid accumulation part in a vacuum fluid transfer system of Example 3 according to the embodiment of the present invention.
FIG. 11 is a partially enlarged cross-sectional view showing a structure of main portions of a fluid accumulation part in a vacuum fluid transfer system of Example 4 according to the embodiment of the present invention.
FIG. 12 is a partially enlarged cross-sectional view showing a structure of main portions of a fluid accumulation part in a vacuum fluid transfer system of Example 5 according to the embodiment of the present invention.
FIG. 13A is a partially enlarged cross-sectional view showing a structure of main portions of a fluid accumulation part in a vacuum fluid transfer system of Example 6 according to the embodiment of the present invention.
FIG. 13B is an enlarged cross-sectional view of a section B, showing how a gas-liquid mixture is transferred in the vacuum fluid transfer system of Example 6 according to the embodiment of the present invention.
FIG. 14A is a partially enlarged cross-sectional view showing a structure of main portions of a fluid accumulation part in a vacuum fluid transfer system of Example 7 according to the embodiment of the present invention.
FIG. 14B is a side view showing a pair of reducer members included in the fluid accumulation part in the vacuum fluid transfer system of Example 7 according to the embodiment of the present invention.
FIG. 14C is an enlarged cross-sectional view along an axial direction of the fluid accumulation part in the vacuum fluid transfer system of Example 7 according to the embodiment of the present invention.
FIG. 15A is a partially enlarged cross-sectional view showing a structure of main portions of a fluid accumulation part in a vacuum fluid transfer system of Example 8 according to the embodiment of the present invention.
FIG. 15B is an enlarged cross-sectional view at a position along the line A-A, showing the structure of the fluid accumulation part in the vacuum fluid transfer system of Example 8 according to the embodiment of the present invention.

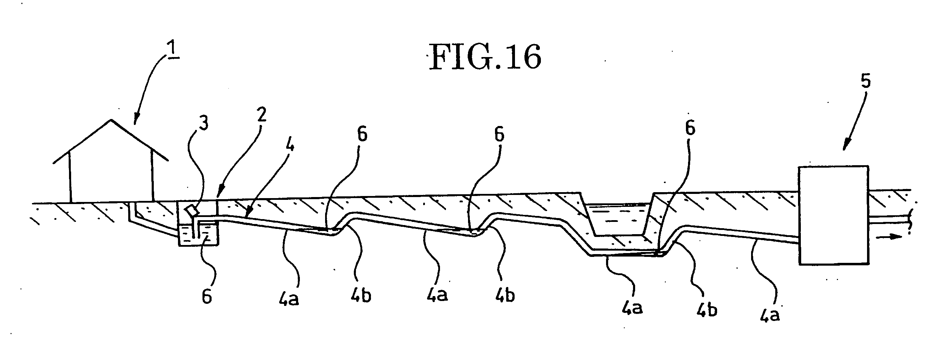

FIG. 16 is a schematic longitudinal cross-sectional view showing an example of sawtooth pipe arrangement having lift portions buried in the ground in a vacuum fluid transfer system of a conventional example.
FIG. 17 is a schematic longitudinal cross-sectional view showing a state where sawtooth pipe arrangement is applied to a floating cottage in a vacuum fluid transfer system of another conventional example.

### BEST MODE FOR CARRYING OUT THE INVENTION

Next, with reference to the drawings, description will be given of a vacuum fluid transfer system according to an embodiment of the present invention.

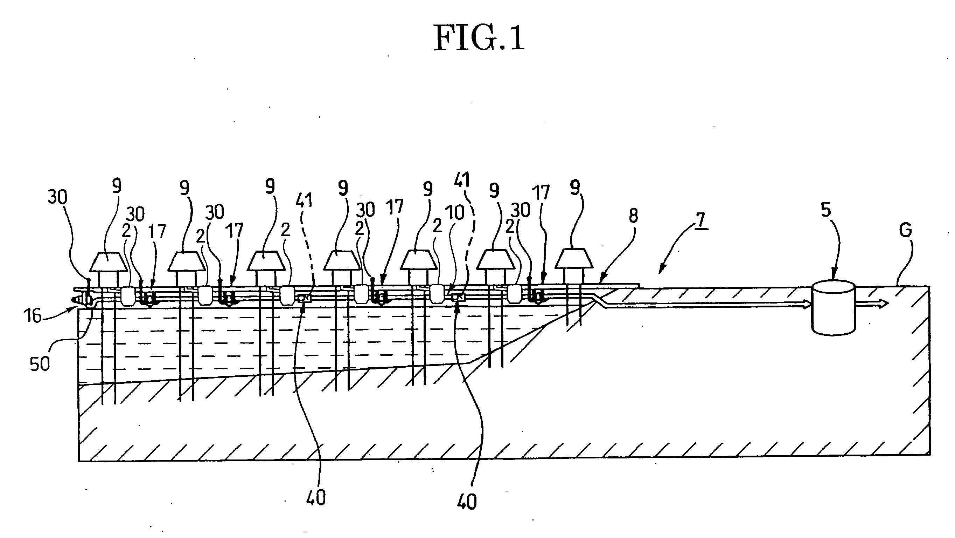

FIGs.1 to 10 show the vacuum fluid transfer system according to the embodiment of the present invention.

Note that the same parts as those in the conventional example or the equivalent parts thereto will be denoted by the same reference numerals for the description.

First, a structure shown in FIG. 1 will be described. In this embodiment, buildings, such as a plurality of floating cottages 9..., are provided at predetermined intervals on a pier 8 built at a waterside 7.

In each of the floating cottages 9..., as shown in FIG. 2, a flush toilet 12, a bath tub 13, a wash stand 14, a kitchen sink 15 and the like are provided. The vacuum fluid transfer system is configured to allow sewage to naturally flow down toward below the pier 8 through each drain pipes 11a and 11b, and then flow into a sewage tank 2 with a vacuum valve.

Moreover, a main pipe line 10 mainly includes a horizontally arranged portion and also a composite pipe having a combined gradient obtained by combining slightly upward and downward gradient portions. A downstream-side end portion of the main pipe line 10 is connected to a collecting tank inside a vacuum pump system 5 provided on a ground G. The vacuum fluid transfer system is configured to enable the sewage in the main pipe line 10, which is discharged from the sewage tank 2 with the vacuum valve, to be transferred by activating a vacuum pump to set inside of the collecting tank in a vacuum state.

### EXAMPLE 1

FIGs.1 to 9 show a vacuum fluid transfer system of Example 1 according to the embodiment of the present invention.

First, a structure of the vacuum fluid transfer system will be described. In the vacuum fluid transfer system of Example 1, a terminal automatic suction valve 16 and a plurality of automatic suction valves 17... are provided so as to be suspended from a lower surface of the pier 8, the terminal automatic suction valve 16 serving as a suction device for introducing the atmosphere into the main pipe line 10 from outside of the main pipe line 10 when a degree of vacuum inside the main pipe line 10 is reduced to a predetermined value or lower, and the plurality of automatic suction valves 17 being placed at predetermined intervals.

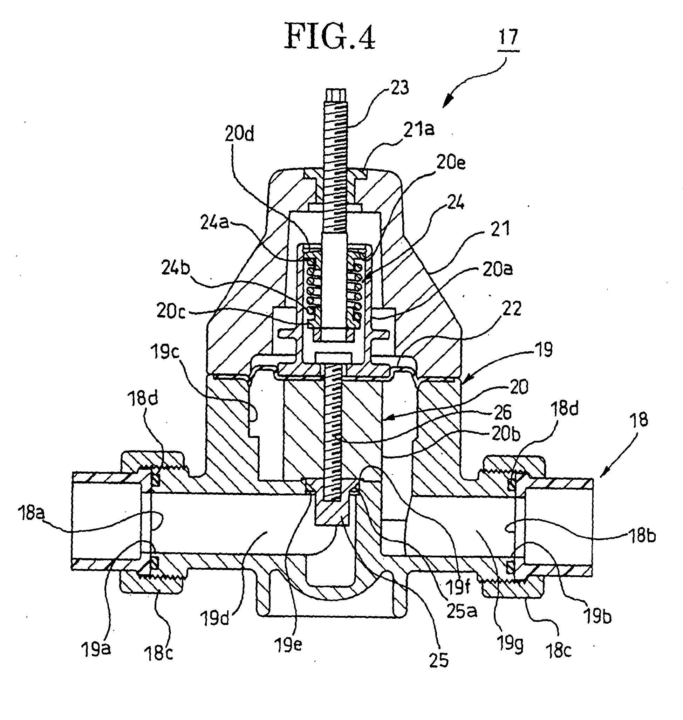

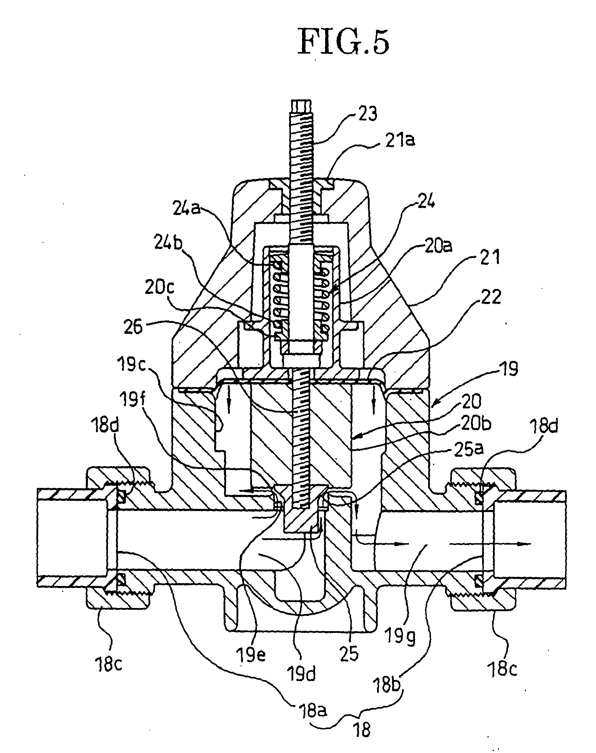

Among the above, a structure of the automatic suction valve 17 will be described in detail with reference to FIGs. 4 and 5.

Note that the terminal automatic suction valve 16 has approximately the same structure as that of the automatic suction valve 17 except that the terminal automatic suction valve 16 is suspended below the floating cottage 9 most distant from the ground G by setting a mounting direction thereof to be different from that of the automatic suction valve 17 by 90°, and that a suction noise reduction silencer 16a is attached thereto. Thus, description thereof will be omitted.

As shown in FIG. 4, the automatic suction valve 17 mainly includes a valve box 19, a valve body 20 slidably housed in the valve box 19 and a cap body 21 fixed in a watertight state while sandwiching a diaphragm 22 with the valve box 19.

An upstream-side end portion 18a of an air introduction pipe 18 and a downstream-side end portion 18b thereof are fixed to the valve box 19 by fitting screw parts of respective fixation ring members 18c and 18c thereto. Moreover, connecting ports 19a and 19b are integrally provided in the valve box 19, which are connected in a watertight sealed state by use of water stop ring members 18d and 18d.

Moreover, in the valve box 19, a valve body housing concave part 19c having an approximately hollow cylindrical shape is provided along an axial direction while setting an adjusting bolt member 23 for supporting the valve body 20 at the center position. The valve body housing concave part 19c is communicated with a cylindrical upstream-side compartment 19d having an axial direction in a radial direction through a circular inflow port 19e.

Furthermore, at a top of the cap body 21, a screw-fitting member 21a for controlling opening and closing timing of the valve body is provided.

An external thread part of the adjusting bolt member 23 is screw-fitted to an internal thread part formed in the screw-fitting member 21a.

Moreover, at a lower end of the adjusting bolt member 23, a supporting flange member 20c is fixed. Accordingly, a position of the supporting flange member 20c along the axial direction can be adjusted by changing a screw-fitting amount of the adjusting bolt member 23.

Moreover, the adjusting bolt member 23 is inserted from above into an upper valve body 20a of the valve body 20.

Inside the upper valve body 20a, a spring member 24 is provided, which is supported on the supporting flange member 20c by having its lower end portion 24b come into contact therewith. The spring member 24 is provided so as to allow the adjusting bolt member 23 to be inserted into its center.

Through a flange member 20d which comes into contact with an upper end portion 24a of the spring member 24, an upper wall inner surface 20e of the upper valve body 20a is biased upward.

Moreover, by use of a fixation valve rod member 26, a guide body 25 having a tapered seal face part 25a is fastened and fixed to a lower end portion of the valve body 20 together with the upper valve body 20a, the diaphragm 22 and a lower valve body 20b, which constitute the valve body 20.

The diaphragm 22 is formed of elastically deformable thermoplastic elastomer and the like.

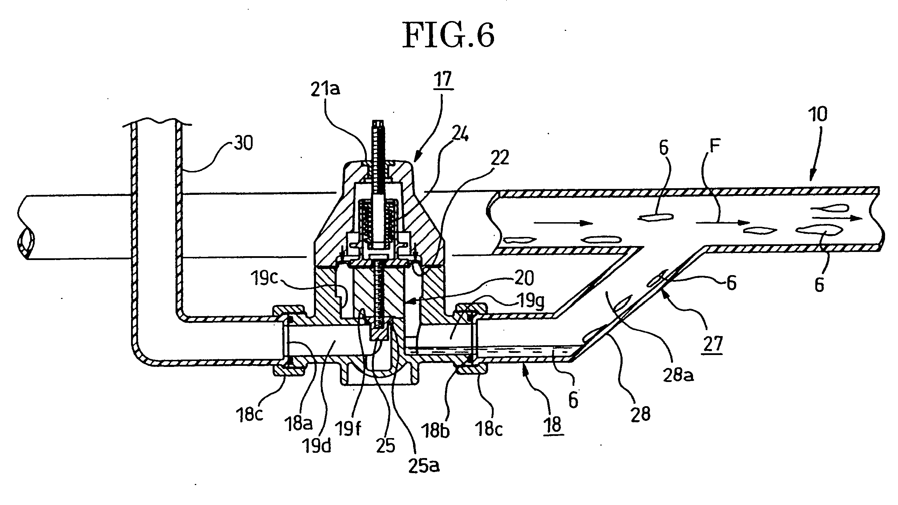

Moreover, the valve body housing concave part 19c is communicated with a Y-shaped pipe part 27 as shown in FIG. 6 from the end portion 18b of the air introduction pipe 18 through a cylindrical downstream-side compartment 19g having the axial direction in the radial direction.

The Y-shaped pipe part 27 has a branch pipe 28 provided integrally and continuously with the air introduction pipe 18.

The branch pipe 28 has a branch pipe line 28a which is branched off obliquely downward from the main pipe line 10, and which is connected at an acute angle (about 30 to 45 degrees in Example 1) to the main pipe line 10 so as to allow a merging direction to follow a fluid passing direction F in the main pipe line 10.

Moreover, an upstream-side portion extended from the end portion 18a of the air introduction pipe 18 is connected to an air inflow pipe member 30 provided upright in a vertical direction.

As shown in FIG. 6, when a negative pressure from the main pipe line 10 side reaches the valve body housing concave part 19c, the diaphragm 22 is pulled down against biasing force of the spring member 24. Accordingly, a peripheral portion 19f of the inflow port 19e is sealed by the tapered seal face part 25a.

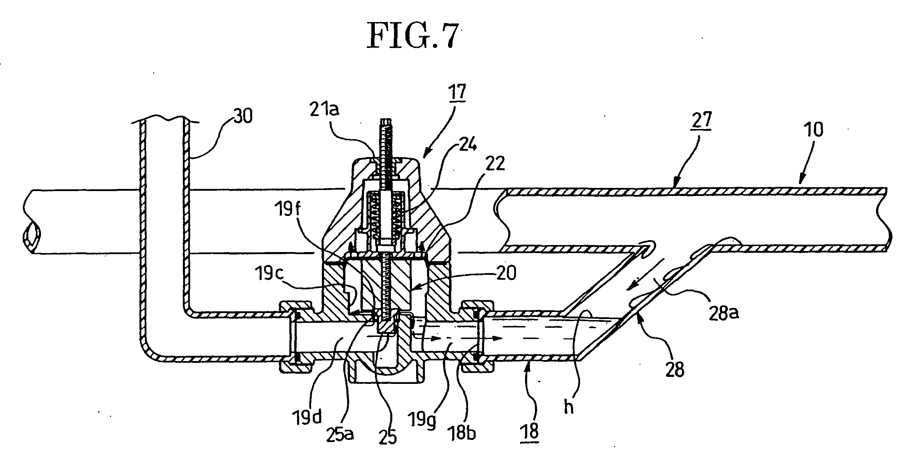

Moreover, as shown in FIG. 7, when a head h rises and the downstream-side compartment 19g is filled with the fluid, the negative pressure from the main pipe line 10 side does not reach the valve body housing concave part 19c, and the diaphragm 22 is moved upward by the biasing force of the spring member 24.

Thus, a gap through which the atmosphere passes is formed between the tapered seal face part 25a and the peripheral portion 19f of the inflow port 19e. Accordingly, the air that forms a gas-liquid multiphase flow is led from the upstream-side compartment 19d toward the direction of the valve body housing concave part 19c.

In Example 1, as shown in FIGs.6 and 7, a downstream side of the downstream-side compartment 19g in the automatic suction valve 17 is positioned in a portion where the sewage 6 is accumulated in a horizontal part of the air introduction pipe 18 as a fluid accumulation part after flowing down through the branch pipe line 28a in the branch pipe 28 in response to reduction in the degree of vacuum inside the main pipe line 10.

When the head h is set to a position over an uppermost position of the horizontal part of the air introduction pipe 18 or over an uppermost position of the downstream-side compartment 19g, even if the diminishing negative pressure remains in the main pipe line 10, an air lock is provided by use of a plug so as to prevent the negative pressure from reaching the valve body housing concave part 19c. Thus, it is possible to improve, with this structure, a reaction rate at which the automatic suction valve 17 starts its operations.

Furthermore, in Example 1, as shown in FIG. 2, the terminal automatic suction valve 16 is suspended below the floating cottage 9 most distant from the ground G by setting a mounting direction thereof to be different from those of the other automatic suction valves 17 by 90 degrees.

An arc-shaped fluid accumulation part 50 curved to be convex downward is connected to a connection portion between the terminal automatic suction valve 16 and the main pipe line 10 on the downstream side so as to be adjacent to the downstream-side compartment 19g.

In the fluid accumulation part 50, a height-direction position is set in such a manner that an internal space of the downstream-side compartment 19g in the automatic suction valve 17 is positioned in the inside portion where the sewage 6 is accumulated.

Moreover, in Example 1, as shown in FIGs.1 and 2, the sewage tank 2 is connected to a part of the main pipe line 10.

The sewage tank 2 has a vacuum valve 3 provided therein, which is opened to introduce the atmosphere when the sewage 6 as the fluid stored therein reaches a certain amount and thus transfers the sewage 6 in the sewage tank 2 through the main pipe line 10.

Specifically, in the sewage tank 2, when a detection pipe provided therein detects that the sewage 6 flowing into the sewage tank 2 is accumulated to a certain amount, the vacuum valve 3 is opened to transfer the sewage 6 into the main pipe line 10.

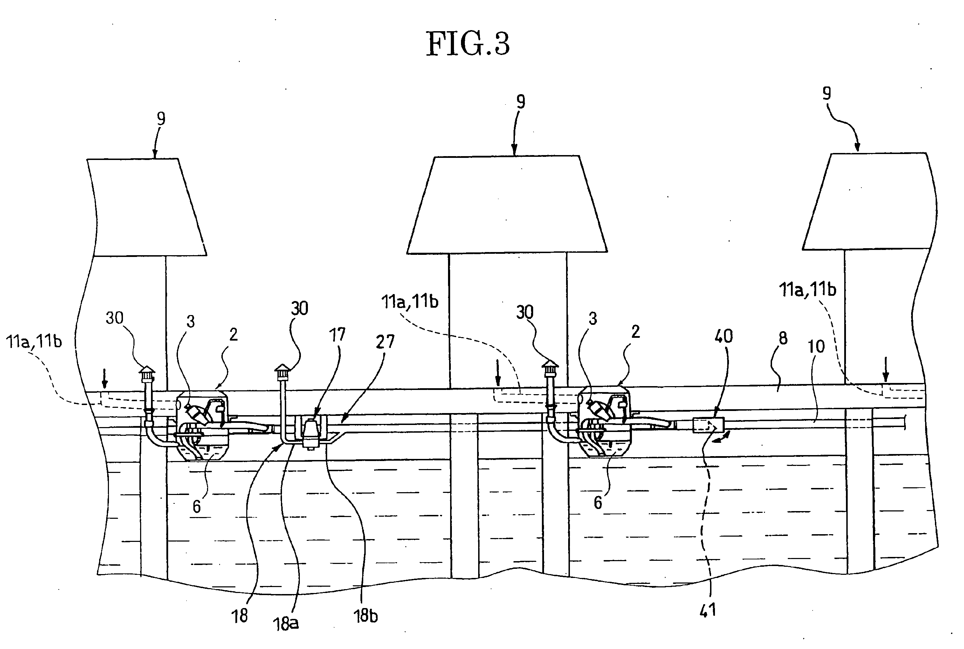

Furthermore, in Example 1, as shown in FIGs.1 and 3, a plurality of check valves 40 ... for preventing a backflow of the fluid in the main pipe line 10 are provided in a part of the main pipe line 10, and each of the check valves 40 is positioned on the downstream side of each of the automatic suction valves 17.

In the check valve 40, a swing valve main body 41 is provided so as to be swingable around a rotating shaft on an upper side and operated in a single swing manner. Thus, the check valve 40 is configured to prevent the backflow of the fluid even if an inversion phenomenon occurs, in which opening and closing of the pipe line reduces the degree of vacuum on the downstream side and increases the degree of vacuum on the upstream side.

Moreover, in the vacuum fluid transfer system of Example 1, in the case of designing for pipe arrangement having a small number of gas-liquid mixed spots, although an air lock releasing effect can be achieved by automatic suction, a large quantity of the fluid may be transferred to a vacuum station in a short period of time.

A capacity of the collecting tank is designed on the assumption that the sewage equivalent to maximum hourly sewage continuously flows into the collecting tank in the vacuum pump system 5, and thereby the capacity is set so as not to cause an overflow in the collecting tank even in such a case mentioned above, as in the case of designing a pressure pump.

Next, operations of the vacuum fluid transfer system of Example 1 will be described.

In the vacuum fluid transfer system of Example 1 thus configured, the vacuum pump provided in the vacuum pump system 5 shown in FIG. 1 is activated to set the inside of the main pipe line 10 in a vacuum state.

The sewage 6 used for plumbing equipment, such as the flush toilet 12, the bath tub 13, the wash stand 14 and the kitchen sink 15, in the floating cottage 9 shown in FIG. 2 naturally flows down through the drain pipes 11a and 11b, and flows into the sewage tank 2 with the vacuum valve.

In the sewage tank 2, when the sewage 6 as the fluid stored therein reaches a certain amount, the detection pipe provided therein detects that the sewage 6 flowing into the sewage tank 2 is accumulated to a certain amount.

According to the detection, the vacuum valve 3 is opened to introduce the atmosphere, thereby transferring the sewage 6 inside the sewage tank 2 into the main pipe line 10.

As shown in FIG. 6, in the horizontally arranged main pipe line 10, transferring force is applied to the sewage 6 transferred by opening the vacuum valve 3 in the sewage tank 2. Specifically, the transferring force is applied along an extending direction of the main pipe line 10 by a pressure difference between the degree of vacuum on the upstream side of the sewage 6 and the degree of vacuum on the downstream side thereof. Thus, the sewage 6 is smoothly transferred toward the vacuum pump system 5.

In this event, since the branch pipe 28 in the Y-shaped pipe part 27 is connected obliquely downward, some of the sewage 6 flows down through the branch pipe line 28a.

In Example 1, the downstream-side horizontal part of the air introduction pipe 18 communicated with the branch pipe 28 is set to have a diameter smaller than that of the main pipe line 10.

Thus, as shown in FIG. 7, the main pipe line 10 is air-locked by the sewage 6 and, before the sewage 6 flows into the branch pipe line 28a, the head h of the sewage 6 is set to the position over the uppermost position of the horizontal part of the air introduction pipe 18 or over the uppermost position of the downstream-side compartment 19g.

Thus, even if the diminishing negative pressure remains in the main pipe line 10 that is about to be air-locked, the air lock is provided by use of a plug so as to prevent the negative pressure from reaching the valve body housing concave part 19c.

In Example 1, the downstream-side horizontal part of the air introduction pipe 18 communicated with the branch pipe 28 is set to have the diameter smaller than that of the main pipe line 10. Thus, even if the amount of the sewage 6 accumulated is small, the plug capable of providing the air lock can be obtained.

In this event, the downstream-side compartment 19g in the automatic suction valve 17 is positioned in the fluid accumulation part below the branch pipe line 28a.

Thus, the space inside the downstream-side compartment 19g is filled with the accumulated sewage 6, and the degree of vacuum inside the fluid accumulation part is reduced. Accordingly, compared with the case where no fluid accumulation part is provided, the degree of vacuum is quickly reduced to the degree of vacuum at which the automatic suction valve 17 starts its operations.

Consequently, it is possible to improve the reaction rate at which the automatic suction valve 17 starts its operations. Moreover, the operations of the automatic suction valve 17 can be started just before the air lock occurs. Furthermore, without being limited to the case where the air lock has occurred, the automatic suction valve 17 can be opened immediately by previously detecting the air lock.

As shown in FIG. 7, in response to reduction in the degree of vacuum (rise in the atmospheric pressure) inside the valve body housing concave part 19c in the automatic suction valve 17, the diaphragm 22 is pulled up by the biasing force of the spring member 24. Accordingly, the gap through which the atmosphere passes is formed between the tapered seal face part 25a and the peripheral portion 19f of the inflow port 19e.

Accordingly, the atmosphere led into the automatic suction valve 17 from the air inflow pipe member 30 through the upstream-side compartment 19d flows toward the valve body housing concave part 19c through the gap between the tapered seal face part 25a and the peripheral portion 19f of the inflow port 19e.

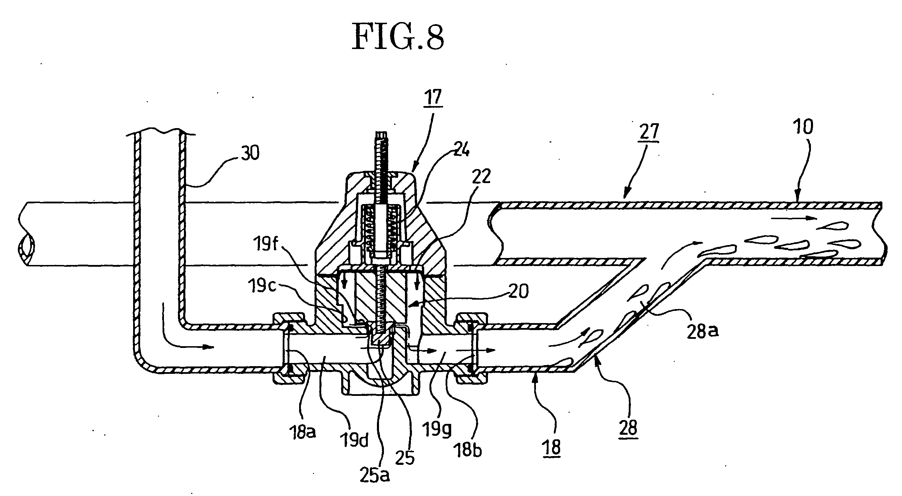

Thus, as shown in FIG. 8, the introduced atmosphere passes through the horizontal part of the air introduction pipe 18 and through the sewage 6 accumulated in the downstream-side compartment 19g, and pushes up the sewage 6 toward the direction of the main pipe line 10 while forming a gas-liquid multiphase flow.

Specifically, when the introduced atmosphere passes through the sewage 6 accumulated in the fluid accumulation part, the sewage 6 forms the gas-liquid multiphase flow together with the introduced atmosphere. Thus, sufficient thrust required to transfer the sewage 6 can be obtained.

As a consequence, predetermined thrust is applied to the sewage 6 transferred toward the downstream side in the main pipe line. Thus, even if the air lock is caused by the sewage inside the main pipe line 10, the air lock portion is swept away by the gas-liquid multiphase flow containing the atmosphere introduced by the automatic suction valve 17. Accordingly, the sewage inside the main pipe line 10 horizontally arranged is transferred toward the downstream side.

When the air lock is released as described above, the degree of vacuum inside the main pipe line 10 is increased again.

Along with the increase in the degree of vacuum inside the main pipe line 10, the degrees of vacuum inside the downstream-side compartment 19g and the valve body housing concave part 19c are also increased (drop in the atmospheric pressure). Thus, the diaphragm 22 in the automatic suction valve 17 is pulled down against the biasing force of the spring member 24. Accordingly, the peripheral portion 19f of the inflow port 19e is sealed by the tapered seal face part 25a.

The suction by the automatic suction valve 17 is thus stopped, and thereby the inside of the main pipe line 10 can be restored to a desired degree of vacuum.

As described above, the respective automatic suction valves 17 can individually transfer the sewage 6 inside the branch pipes 28 as the gas-liquid multiphase flows.

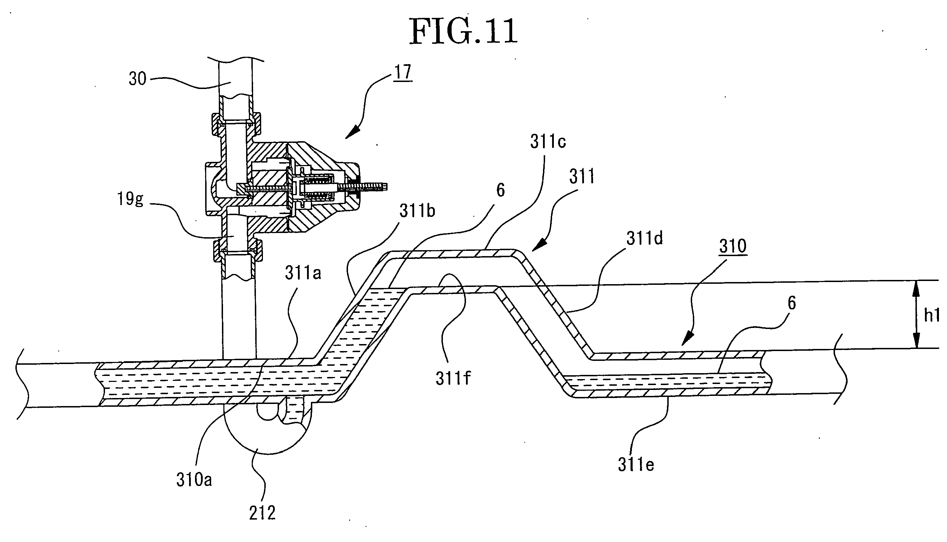

Since no lift portions are required unlike the conventional case, no vertical piping space is required. Thus, it is no longer required to provide sawtooth pipe arrangement as shown in FIG. 11.

Hence, as shown in FIG. 1, the suspended pipes below the pier 8, rolling pipes, such as those under building floors and temporary pipes, and the like can be installed by use of a construction method according to a construction site having difficulty in securing an installation space in a height direction.

Moreover, when the air lock is released by the automatic suction valve 17, the degree of vacuum inside the main pipe line 10 is increased again.

Thus, when the sewage 6 collected in the sewage tank 2 is transferred by use of the vacuum valve 3, a degree of vacuum required to transfer the sewage 6 can be easily obtained.

Furthermore, in Example 1, the horizontal part inside the branch pipe line 28a as the fluid accumulation part is provided in the branch pipe 28, which is branched off downward from the main pipe line 10.

Thus, by providing the automatic suction valve 17 at the end of the branch pipe 28, the downstream-side compartment 19g that is the downstream side of the automatic suction valve 17 can be positioned in the fluid accumulation part. Thus, it is not required to additionally provide a component to form the fluid accumulation part. As a result, an increase in construction cost can be suppressed, and high installation space efficiency is achieved.

Moreover, the Y-shaped pipe part 27 having the branch pipe 28 provided therein is formed to have the branch pipe line 28a connected at an acute angle to the main pipe line 10 so as to allow the merging direction of the branch pipe 28 into the main pipe line 10 to follow the fluid passing direction F in the main pipe line 10.

Thus, when the gas-liquid multiphase flow is pumped into the main pipe line 10 from the branch pipe line 28a, the fluid inside the main pipe line 10 and the gas-liquid multiphase flow are smoothly merged together while applying thrust to the fluid. Accordingly, the fluid can be efficiently transferred toward the vacuum pump system 5.

Furthermore, in Example 1, the plurality of check valves 40... are provided in some portions of the main pipe line 10 in such a manner that each of the check valves 40 is positioned on the downstream side of each of the automatic suction valves 17.

In the check valve 40, the swingably provided swing valve main body 41 opens and closes the pipe line. The pipe line is released so as to allow the sewage 6 transferred to the vacuum pump system 5 from the floating cottage 9 to pass the check valve by pushing open the swing valve main body 41.

Moreover, the sewage 6 flowing toward the floating cottage 9 from the vacuum pump system 5 is prevented from passing the check valve by closing the swing valve main body 41.

For this reason, when the main pipe line 10 is blocked by the check valve 40, the inversion phenomenon occurs, in which the degree of vacuum on the downstream side is reduced and the degree of vacuum on the upstream side is increased. Even if such a phenomenon occurs, the backflow of the fluid is prevented by closing the swing valve main body 41 in the check valve 40 even when the main pipe line 10 is horizontally arranged.

Accordingly, by straightening the main pipe line 10, the fluid can be transferred more stably, and thereby power loss caused by friction between the fluid and an inner wall surface of the main pipe line 10 can be reduced.

Moreover, the backflow amount of the fluid can be reduced by the plurality of check valves 40. Thus, the main pipe line 10 with much higher transfer efficiency can be obtained.

Furthermore, in Example 1, as shown in FIGs.1 and 2, when the degree of vacuum inside the main pipe line 10 is reduced, the atmosphere is introduced into the main pipe line 10 from the outside of the main pipe line 10 by the terminal automatic suction valve 16 provided at the end of the uppermost stream side of the main pipe line 10.

Thus, even if the air lock is caused by the sewage inside the main pipe line 10, the air lock portion is swept away by the atmosphere introduced by the terminal automatic suction valve 16. Accordingly, the sewage inside the main pipe line 10 horizontally arranged can be allowed to pass through the main pipe line at once and transferred toward the downstream side.

As described above, the fluid can also be allowed to pass through the main pipe line 10 at once and transferred by the terminal automatic suction valve 16 provided at the end of the main pipe line 10. Thus, the transfer efficiency can be improved.

Moreover, in Example 1, the arc-shaped fluid accumulation part 50 curved to be convex downward is connected to the connection portion between the terminal automatic suction valve 16 and the main pipe line 10 on the downstream side so as to be adjacent to the downstream-side compartment 19g.

In the fluid accumulation part 50, the height-direction position is set in such a manner that the internal space of the downstream-side compartment 19g in the terminal automatic suction valve 16 is positioned in the portion where the sewage 6 is accumulated.

Thus, before the air lock occurs in the main pipe line 10, the sewage 6 flowing down to be accumulated in the fluid accumulation part 50 forms the air lock in the downstream-side compartment 19g in the terminal automatic suction valve 16. Accordingly, the atmosphere is temporarily introduced from the terminal automatic suction valve 16.

Hence, the gas-liquid multiphase flow of the atmosphere and the sewage 6 accumulated in the fluid accumulation part 50 is intermittently transferred to enable the sewage inside the main pipe line 10 horizontally arranged to pass through the main pipe line at once and to be transferred toward the downstream side.

### EXAMPLE 2

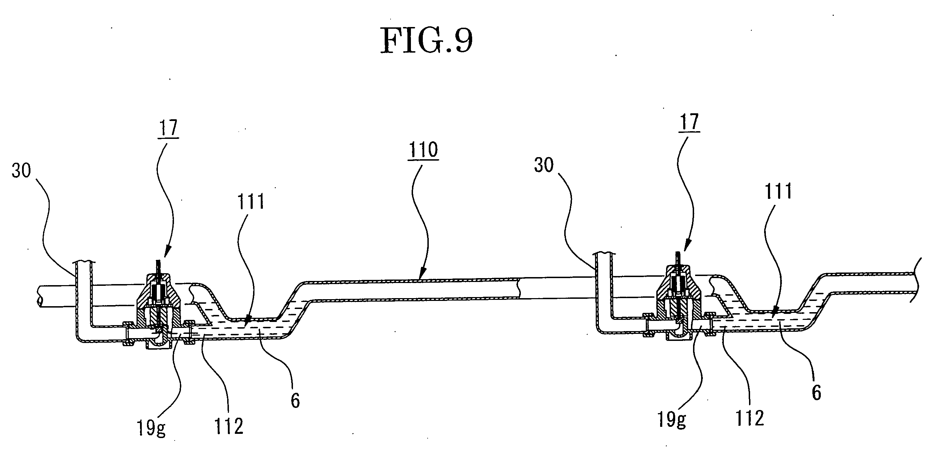

FIG. 9 shows a vacuum fluid transfer system of Example 2 according to the embodiment of the present invention.

Note that the same parts as those in Example 1 or the equivalent parts thereto will be denoted by the same reference numerals and symbols and described.

In the vacuum fluid transfer system of Example 2, pocket parts 111 and 111 as the fluid accumulation parts are configured to be formed in a main pipe line 110 as a horizontally arranged pipe line by forming the main pipe line 110 to be convex downward.

In each of the pocket parts 111 and 111, a downstream-side compartment 19g that is a downstream side of an automatic suction valve 17 as an automatic suction device, is connected to a branch pipe part 112, which is branched off from a sidewall part so as to have an approximately Y shape, and is positioned in a portion where sewage 6 is accumulated.

Next, operations of the vacuum fluid transfer system of Example 2 will be described.

In the vacuum fluid transfer system of Example 2, in addition to the effects of the vacuum fluid transfer system of Example 1 described above, it is also possible to easily form the fluid accumulation parts, in which plugs for providing air locks are formed, in the main pipe line 110 by setting the respective pocket parts 111 and 111 to have the shape obtained by forming the main pipe line 110 to be convex downward.

Thus, the branch pipe part 112 is branched off from a pipe wall part of the main pipe line 110 positioned in the pocket part 111, and the downstream-side compartment 19g in the automatic suction valve 17 is connected thereto. Accordingly, the internal space of the downstream-side compartment 19g that is the downstream side of the automatic suction valve 17 can be positioned in the fluid accumulation part formed by the pocket part 111.

Hence, it is not required to additionally provide a component to form the fluid accumulation part and high installation space efficiency is achieved.

Since other structures and effects are the same as those in Example 1 or equivalent thereto, description thereof will be omitted.

### EXAMPLE 3

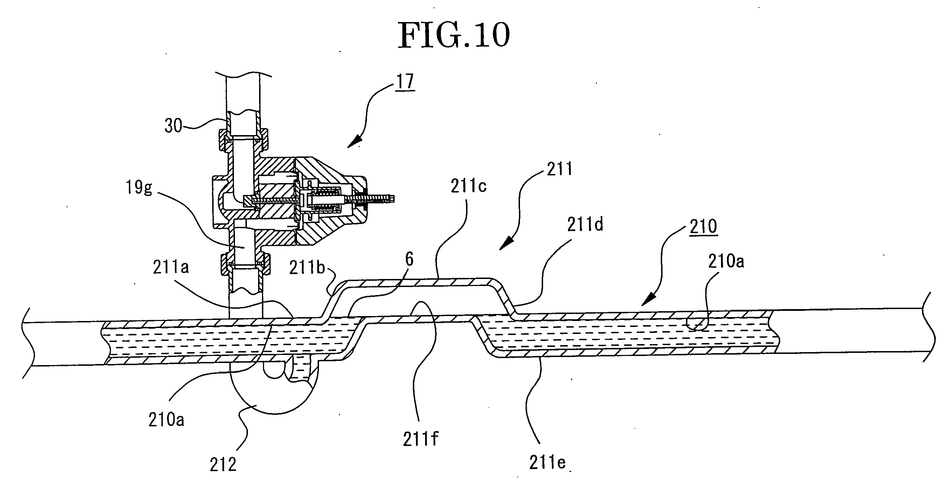

FIG. 10 shows a vacuum fluid transfer system of Example 3 according to the embodiment of the present invention.

Note that the same parts as those in Examples 1 and 2 or the equivalent parts thereto will be denoted by the same reference numerals and symbols and described.

In the vacuum fluid transfer system of Example 3, an upward convex pocket part 211 as the fluid accumulation part is formed continuously and integrally with a main pipe line 210 as a horizontally arranged pipe line so as to have a convex shape above the main pipe line.
Moreover, the pocket part may have a downward convex shape as shown in FIG. 9, which leads to a zero lift meaning that a lift of the same diameter (h1= 0 in FIG. 11) is zero. In the case of the floating cottage, the downward convex shape is preferable since the pipes are suspended.

The upward convex pocket part 211 in Example 3 is formed to have a pipe line mainly including a horizontal portion 211a on an upstream side, an upward gradient portion 211b, a horizontal portion 211c, a downward gradient portion 211d and a horizontal portion 211e on a downstream side, all of which are continuously provided.

Among the above, a bottom 211f of the horizontal portion 211c is formed to have approximately the same height as that of an upper wall portion 210a of the main pipe line 210.

Moreover, by use of a J-shaped pipe member 212 protruding downward, the downstream-side compartment 19g in the automatic suction valve 17 is connected to the bottom of the horizontal portion 211a on the upstream side in the upward convex pocket part 211. The downstream side of the automatic suction valve 17 is positioned in a portion where sewage is accumulated.

Next, effects of the vacuum fluid transfer system of Example 3 will be described.

In the vacuum fluid transfer system of Example 3 thus configured, the following effect is further achieved in addition to the effects of Examples 1 and 2 according to the embodiment. Specifically, when the sewage level reaches near the bottom 211f of the horizontal portion 211c, the main pipe line 210 is filled with the sewage up to the upper wall portion 210a, and thus is blocked.

As a result, a degree of vacuum in the portion where the sewage is accumulated on the upstream side of the upward gradient portion 211b adjacent to the horizontal portion 211a on the upstream side is reduced. Thus, the automatic suction valve 17 is opened.

Since other structures and effects are the same as those in Examples 1 and 2 or equivalent thereto, description thereof will be omitted.

### EXAMPLE 4

FIG. 11 shows a vacuum fluid transfer system of Example 4 according to the embodiment of the present invention.

Note that the same parts as those in Examples 1 to 3 or the equivalent parts thereto will be denoted by the same reference numerals and symbols and described.

In the vacuum fluid transfer system of Example 4, an upward convex pocket part 311 as the fluid accumulation part is formed continuously and integrally with a main pipe line 310 as a horizontally arranged pipe line, so as to have a convex shape above the main pipe line.

The upward convex pocket part 311 in Example 4 is formed to have a pipe line mainly including a horizontal portion 311a on an upstream side, an upward gradient portion 311b, a horizontal portion 311c, a downward gradient portion 311d and a horizontal portion 311e on a downstream side, all of which are continuously provided.

Among the above, a bottom 311f of the horizontal portion 311c is formed to be positioned higher than an upper wall portion 310a of the main pipe line 310 by a given height h1.
Note that the case of the given height h1= 0 is defined as a lift of the same diameter.

Moreover, by use of a J-shaped pipe member 212 protruding downward, the downstream-side compartment 19g in the automatic suction valve 17 is connected to the bottom of the horizontal portion 311a on the upstream side in the upward convex pocket part 311. The downstream side of the automatic suction valve 17 is positioned in a portion where sewage is accumulated.

Next, effects of the vacuum fluid transfer system of Example 4 will be described.

In the vacuum fluid transfer system of Example 4 thus configured, the following effect is further achieved in addition to the effects of Examples 1 to 3 according to the embodiment. Specifically, before the sewage level reaches near the bottom 311f of the horizontal portion 311c, the main pipe line 310 is filled with the sewage up to the upper wall portion 310a, and thus is blocked.

As a result, a degree of vacuum in the portion where the sewage is accumulated is reduced, the portion being positioned on the upstream side of the upward gradient portion 311b adjacent to the horizontal portion 311a on the upstream side. Thus, the automatic suction valve 17 is surely opened.

Since other structures and effects are the same as those in Examples 1 to 3 or equivalent thereto, description thereof will be omitted. EXAMPLE 5

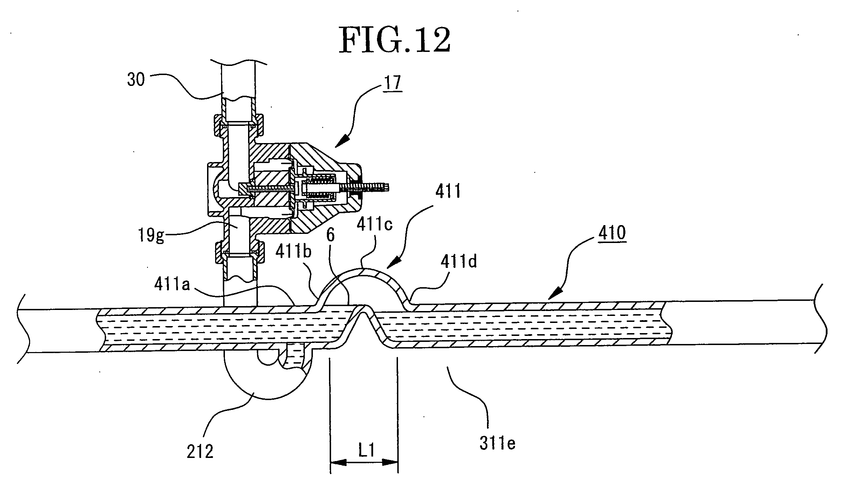

FIG. 12 shows a vacuum fluid transfer system of Example 5 according to the embodiment of the present invention.

Note that the same parts as those in Examples 1 to 4 or the equivalent parts thereto will be denoted by the same reference numerals and symbols and described.

In the vacuum fluid transfer system of Example 5, an upward convex pocket part 411 as the fluid accumulation part is formed continuously and integrally with a main pipe line 410 as a horizontally arranged pipe line, so as to have a convex shape above the main pipe line.
Although, in Example 5, description is given of a modified example of a zero lift with an upward convex shape, a modified example of a zero lift with a downward convex shape may also be adopted.

The upward convex pocket part 411 in Example 5 is formed to have a pipe line mainly including a horizontal portion 411a on an upstream side, an upward gradient portion 411b, a top portion 411c, a downward gradient portion 411d and a horizontal portion 411e on a downstream side, all of which are continuously provided.

Among the above, the top portion 411c is formed so as to be bent with the same inside diameter as that of the pipe line, and to connect between the upward gradient portion 411b and the downward gradient portion 411d.

Moreover, by use of a J-shaped pipe member 212 protruding downward, the downstream-side compartment 19g in the automatic suction valve 17 is connected to the bottom of the horizontal portion 411a on the upstream side in the upward convex pocket part 411. The downstream side of the automatic suction valve 17 is positioned in a portion where sewage is accumulated.

Next, effects of the vacuum fluid transfer system of Example 5 will be described.

In the vacuum fluid transfer system of Example 5 thus configured, the following effect is further achieved in addition to the effects of Examples 1 to 4 according to the embodiment. Specifically, the top portion 411c is bent with the same inside diameter as that of the pipe line to connect between the upward gradient portion 411b and the downward gradient portion 411d.

Thus, a proportion of the upward convex pocket part 411 to the main pipe line 410 is reduced as indicated by a dimension L1 in FIG. 12. Consequently, the vacuum fluid transfer system having much higher space efficiency can be provided.

Since other structures and effects are the same as those in Examples 1 to 4 or equivalent thereto, description thereof will be omitted. EXAMPLE 6

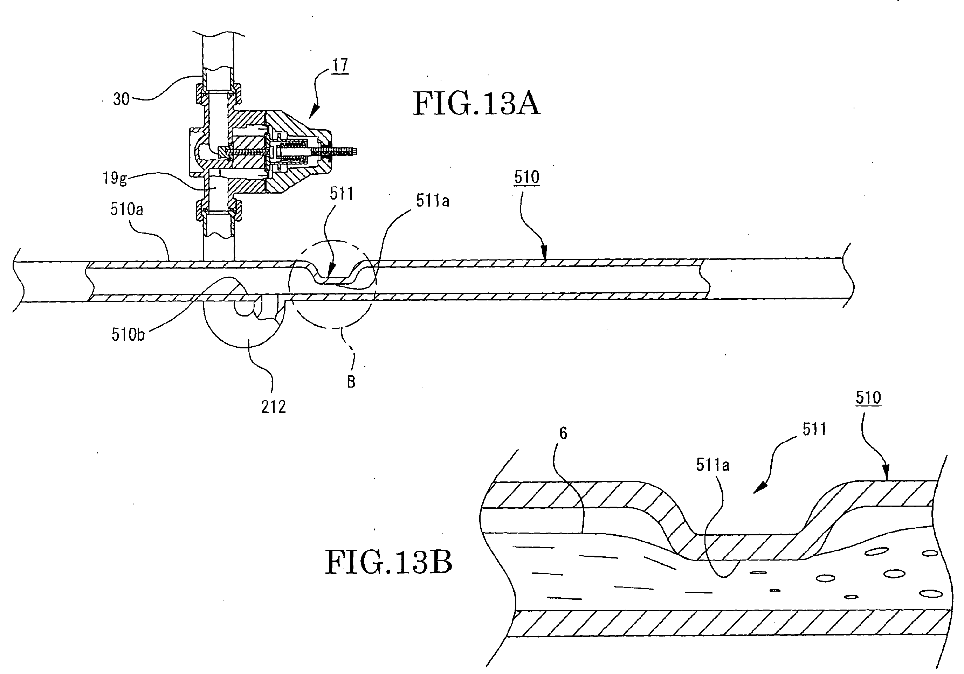

FIGs.13A and 13B show a vacuum fluid transfer system of Example 6 according to the embodiment of the present invention.

Note that the same parts as those in Examples 1 to 5 or the equivalent parts thereto will be denoted by the same reference numerals and symbols and described.

In the vacuum fluid transfer system of Example 6, a depressed part 511 as the fluid accumulation part is formed so as to have an upward convex part 511a protruding inside of a main pipe line 510 as a horizontally arranged pipe line by setting the main pipe line to have a concave upper side face. Moreover, the depressed part 511 is formed so as to reduce a radial opening cross-sectional area in a part of the main pipe line 510.

Moreover, by use of a J-shaped pipe member 212 protruding downward, the downstream-side compartment 19g in the automatic suction valve 17 is connected to a bottom 510b of a horizontal portion 510a on the upstream side of the depressed part 511. The downstream side of the automatic suction valve 17 is positioned in a portion where sewage is accumulated.

Next, effects of the vacuum fluid transfer system of Example 6 will be described.

In the vacuum fluid transfer system of Example 6 thus configured, the following effect is further achieved in addition to the effects of Examples 1 to 5 according to the embodiment. Specifically, the depressed part 511 is formed to have the upward convex part 511a protruding inside of the horizontally arranged main pipe line 510 by setting the main pipe line to have the concave upper side face. Thus, the radial opening cross-sectional area in a part of the main pipe line 510 is reduced by the upward convex part 511a.

The depressed part 511 limits a flow rate. Thus, for example, even if the sewage is separated from a slug flow in gas-liquid separation inside the main pipe line 510, reduction in the radial opening cross-sectional area by the upward convex part 511a enables mixing of the air near a top portion of the pipe inside the main pipe line 510 with the sewage.
In Example 6, the upper side face of the main pipe line 510 is set to have the concave shape while maintaining a shape of a lower side face thereof. However, it is also possible to set the lower side face of the main pipe line 510 to have the concave shape while maintaining the shape of the upper side face thereof.

Thus, only the air is moved near the top portion of the pipe inside the main pipe line 510, thereby making it possible to reduce a risk of not contributing to transfer of the sewage.

Since other structures and effects are the same as those in Examples 1 to 5 or equivalent thereto, description thereof will be omitted.

### EXAMPLE 7

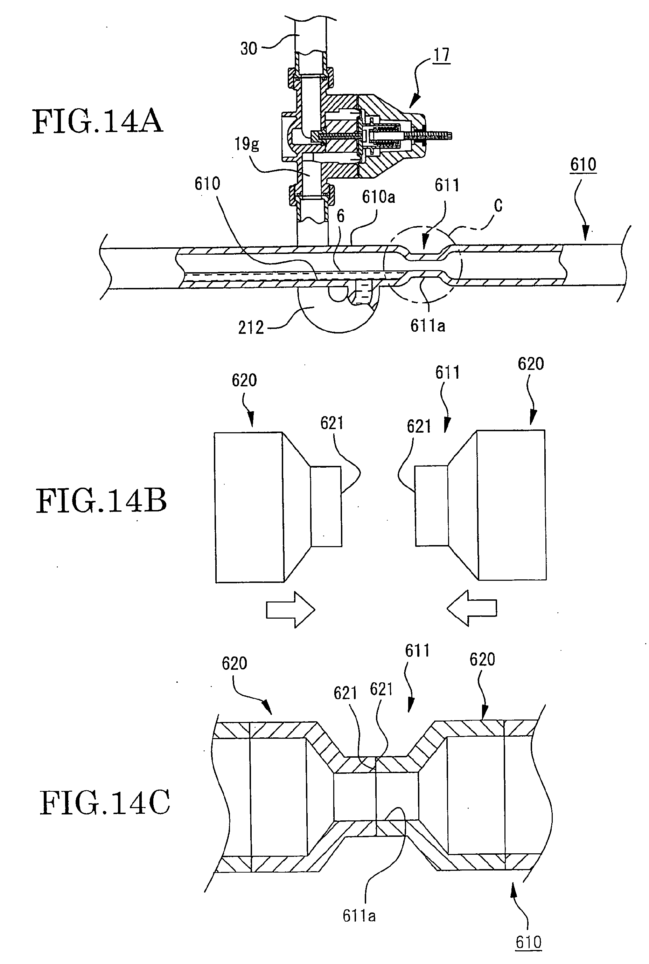

FIGs. 14A to 14C show a vacuum fluid transfer system of Example 7 according to the embodiment of the present invention.

Note that the same parts as those in Examples 1 to 6 or the equivalent parts thereto will be denoted by the same reference numerals and symbols and described.

In the vacuum fluid transfer system of Example 7, a reduced diameter part 611 as the fluid accumulation part is provided in a ring-like concave pattern around a main pipe line 610 as a horizontally arranged pipe line. Moreover, the reduced diameter part 611 is formed so as to have a ring-like convex portion 611a protruding inside the pipe line, and to reduce a radial opening cross-sectional area in a part of the main pipe line 510.

Moreover, by use of a J-shaped pipe member 212 protruding downward, the downstream-side compartment 19g in the automatic suction valve 17 is connected to a bottom 610b of a horizontal portion 610a on the upstream side of the ring-like convex portion 611a. The downstream side of the automatic suction valve 17 is positioned in a portion where sewage is accumulated.

Furthermore, in Example 7, the reduced diameter part 611 shown in FIG. 14A is formed by connecting small diameter parts 621 and 621 of a pair of reducer members 620 and 620 so as to face each other as shown in FIGs.14A and 14B.

Next, effects of the vacuum fluid transfer system of Example 7 will be described.

In the vacuum fluid transfer system of Example 7 thus configured, the following effect is further achieved in addition to the effects of Examples 1 to 6 according to the embodiment. Specifically, the radial opening cross-sectional area in a part of the horizontally arranged main pipe line 610 is reduced by the ring-like convex portion 611a of the reduced diameter part 611.

As a result, the ring-like convex portion 611a limits a flow rate. Thus, for example, even if the sewage is separated from a slug flow in gas-liquid separation inside the main pipe line 610, reduction in the radial opening cross-sectional area by the ring-like convex portion 611a enables mixing of the air near a top portion of the pipe inside the main pipe line 610 with the sewage.

Thus, only the air is moved near the top portion of the pipe inside the main pipe line 610, thereby making it possible to reduce a risk of not contributing to transfer of the sewage.

Furthermore, in Example 7, the reduced diameter part 611 is formed by connecting the small diameter parts 621 and 621 of the pair of reducer members 620 and 620 so as to face each other as shown in FIG. 14B. Thus, as shown in FIG. 14C, the reduced diameter part 611 can be easily provided in a part of the main pipe line 610.

Thus, an increase in manufacturing cost is suppressed.

Since other structures and effects are the same as those in Examples 1 to 6 or equivalent thereto, description thereof will be omitted.

Since other structures and effects are the same as those in Examples 1 to 5 or equivalent thereto, description thereof will be omitted.

### EXAMPLE 8

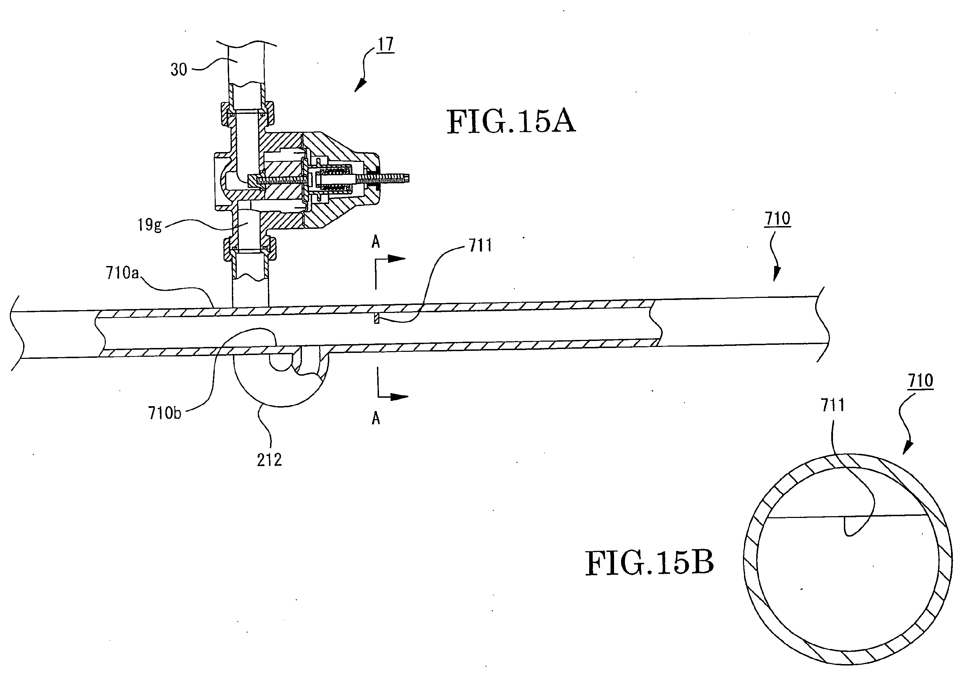

FIGs.15A and 15B show a vacuum fluid transfer system of Example 8 according to the embodiment of the present invention. FIG. 15A is a partially enlarged cross-sectional view showing a structure of a main portion of a fluid accumulation part. FIG. 15B is an enlarged cross-sectional view at a position along the line A-A, showing the structure of the fluid accumulation part shown in FIG. 15A.

Note that the same parts as those in Examples 1 to 7 or the equivalent parts thereto will be denoted by the same reference numerals and symbols and described.

In the vacuum fluid transfer system of Example 8, a partition part 711 as the fluid accumulation part is formed to have an approximately crescent rib shape, and is fixed to an upper side of an inner peripheral wall of a main pipe line 710 as a horizontally arranged pipe line.

In a spot where the partition part 711 is provided, a radial opening cross-sectional area of the main pipe line 710 is reduced.

Furthermore, by use of a J-shaped pipe member 212 protruding downward, the downstream-side compartment 19g in the automatic suction valve 17 is connected to a bottom 710b of a horizontal portion 710a on the upstream side of the partition part 711. The downstream side of the automatic suction valve 17 is positioned in a portion where sewage is accumulated.
Note that, although the partition part 711 is fixed to the upper side of the inner peripheral wall of the main pipe line 710 in FIG. 15A showing Example 8, the partition part 711 can also be fixed to a lower side of the inner peripheral wall of the main pipe line 710.

Next, effects of the vacuum fluid transfer system of Example 8 will be described.

In the vacuum fluid transfer system of Example 8 thus configured, the following effect is further achieved in addition to the effects of Examples 1 to 7 according to the embodiment. Specifically, the radial opening cross-sectional area in a part of the horizontally arranged main pipe line 710 is reduced in the spot where the partition part 711 is provided.

As a result, the partition part 711 limits a flow rate. Thus, for example, even if the sewage is separated from a slug flow in gas-liquid separation inside the main pipe line 710, reduction in the radial opening cross-sectional area by the partition part 711 enables mixing of the air near a top portion of the pipe inside the main pipe line 710 with the sewage.

Thus, only the air is moved near the top portion of the pipe inside the main pipe line 710, thereby making it possible to reduce a risk of not contributing to transfer of the sewage.

Since other structures and effects are the same as those in Examples 1 to 7 or equivalent thereto, description thereof will be omitted.

Although Examples 1 to 8 according to the embodiment of the present invention have been described above in detail with reference to the drawings, the present invention is not limited to Examples 1 to 8 according to the embodiment but includes changes in design without departing from the scope of the present invention.

Specifically, in Example 1 according to the embodiment, the sewage tank 2 is provided in a part of the main pipe line 10, and the vacuum valve 3 is provided in the sewage tank. However, the present invention is not limited thereto. The vacuum fluid transfer system may be configured without using the sewage tank 2 and the vacuum valve 3. Moreover, in the case where the sewage tank 2 and the vacuum valve 3 are used, shapes, numbers and connection shapes thereof are not particularly limited.

Furthermore, in Example 1, the check valves 40 for preventing the backflow of the fluid inside the main pipe line 10 are provided on the downstream sides of the automatic suction valves 17 in some portions of the main pipe line 10. However, the present invention is not limited thereto. The vacuum fluid transfer system may be configured without using the check valves 40. Moreover, in the case where the check valves 40 are used, the shapes, numbers and materials thereof are not particularly limited.

Moreover, in the vacuum fluid transfer system according to the embodiment, the description has been given of the vacuum fluid transfer system for transferring the sewage as an example. However, the present invention is not particularly limited thereto. For example, the vacuum fluid transfer system may transfer any kind of fluids, such as clean water, reclaimed water, rainwater and a mixture thereof, as long as the fluids can be transferred by setting the inside of the pipe line in a vacuum state and utilizing a pressure difference.

Furthermore, in Example 1, the main pipe line 10 is horizontally arranged. This horizontally arranged portion also includes a slightly upward or downward gradient and a composite pipe having a combined gradient of upward and downward gradients, and includes an upward or downward gradient of about 1 to 3 % which does not impair installation space efficiency of an installation site.

Furthermore, the pipe line may have any of the following three arrangement patterns: one including a horizontal portion, an upward gradient portion and a horizontal portion; one including a horizontal portion, a downward gradient portion and a horizontal portion; and one including a horizontal portion. Alternatively, the pipe line may have a combined arrangement pattern including the above three arrangement patterns combined.

Moreover, in the vacuum fluid transfer system according to the embodiment, the automatic suction valve 17 and the terminal automatic suction valve 16 are used as the automatic suction devices. However, the present invention is not limited thereto. For example, the vacuum fluid transfer system may employ any kind of automatic suction devices, such as mechanical or electrically controlled automatic suction devices, without limiting the shape, the number and the structure thereof, as long as the devices can introduce the atmosphere into the pipe line from the outside of the pipe line when the degree of vacuum inside the pipe line is reduced to a predetermined value or lower.

According to the present invention, when the degree of vacuum inside the pipe line is reduced to below the predetermined value, the atmosphere is introduced into the pipe line from the outside of the pipe line by the automatic suction devices.

Thus, even if the air lock is caused by the sewage inside the pipe line, the air lock portion is swept away by the atmosphere introduced by the automatic suction devices. Accordingly, the sewage inside the horizontally arranged pipe line can be transferred toward the downstream side.

When the air lock is released as described above, the degree of vacuum inside the pipe line is increased again. Accordingly, since the suction by the automatic suction devices is stopped, the inside of the pipe line can be restored to a desired degree of vacuum.

Furthermore, since no lift portions are required unlike the conventional case, no vertical piping space is required. Thus, suspended pipes below a bridge beam, rolling pipes, such as those under building floors and temporary pipes, and the like can be installed by use of a construction method according to a construction site.

According to the present invention, when the air lock is released by the automatic suction devices, the degree of vacuum inside the pipe line is increased again.

Thus, when the sewage collected in the sewage tank is transferred by use of the vacuum valve, a degree of vacuum required to transfer the sewage can be easily obtained.

As a result, much higher transfer efficiency is achieved.

According to the present invention, the downstream side of the automatic suction device is positioned in the fluid accumulation part. Thus, when the fluid is accumulated in the fluid accumulation part by reduction in the degree of vacuum, the degree of vacuum is quickly reduced to the degree of vacuum at which the automatic suction device starts its operations compared with the case where no fluid accumulation part is provided.

Accordingly, in the case where the air lock has occurred in the pipe line, the automatic suction device can be opened immediately.

When the introduced atmosphere passes through the fluid accumulated in the fluid accumulation part, the fluid forms a gas-liquid multiphase flow together with the introduced atmosphere. Thus, sufficient thrust required to transfer the fluid is applied to the fluid. Accordingly, the fluid is transferred toward the downstream side through the pipe line.

According to the present invention, the fluid accumulation part is provided in the branch pipe which is branched off downward from the pipe line.

Thus, by providing the automatic suction device at the end of the branch pipe, the downstream side of the automatic suction device can be positioned in the fluid accumulation part. Thus, it is not required to additionally provide a component to form the fluid accumulation part, and high installation space efficiency is achieved.

According to the present invention, the Y-shaped pipe part having the branch pipe provided therein is formed to have the branch pipe line connected at an acute angle to the pipe line so as to allow the merging direction of the branch pipe into the pipe line to follow the fluid passing direction in the pipe line.

Thus, when the gas-liquid multiphase flow is pumped into the pipe line, the fluid inside the pipe line and the gas-liquid multiphase flow are smoothly merged together and transferred while applying thrust to the fluid.

According to the present invention, the fluid accumulation part is formed to have a pipe line including a horizontal portion, an upward gradient portion, a horizontal portion, a downward gradient portion and a horizontal portion, all of which are continuously provided.

The fluid accumulation part is basically designed to have a height not lower than the lift of the same diameter (upward lift that has design lift height= 0). Thus, designing that minimizes a static lift loss can be achieved by combination with the automatic suction effect.

The lift structure of the fluid accumulation part is not limited to the horizontal arrangement. In a normal vacuum sewerage system and the like, a vacuum fluid transfer system free from damage caused by the air lock can be formed by setting the lift structure in a region with less installation spots of vacuum valve units in the pipe line and less interaction with the air and by providing the automatic suction valves in the upstream part.

Thus, only by partially providing some upper space, in the horizontal pipe arrangement, the top portion inside the pipe in the pipe inside diameter and the bottom portion inside the pipe in the lift part are set the same in the case of the lift of the same diameter, for example. Thus, after the lift-up, the pipe arrangement can be smoothly restored to the horizontal arrangement with the original gradient by lift-down.

As a result, a static lift loss in the conventional design can be reduced to 0. Moreover, a static lift loss reduction effect for the lift part in the automatic suction system can be most effectively achieved.

According to the present invention, the pocket parts are formed inside of the pipe line by setting the pipe line to have the downward convex shape.

Thus, by providing the automatic suction device in the pipe wall part of the pipe line positioned in the pocket part, the downstream side of the automatic suction device can be positioned in the fluid accumulation part formed by the pocket part. Accordingly, it is not required to additionally provide a component to form the fluid accumulation part, and high installation space efficiency is achieved.

According to the present invention, the pipe diameter in a part of the pipe line is reduced to temporarily limit the flow rate, and the fluid accumulation part is provided on the downstream side.

In the vacuum sewerage system, the sawtooth pipe arrangement is generally adopted, and the sewage intermittently flows into the pipe line. In many cases, the sewage flows intermittently also in the lift part. The sewage is less likely to flow continuously throughout the pipe line.

When the maximum sewage amount and the pipe diameter are determined by taking into consideration the case where gas-liquid mixing is performed in the reduced portion and the flow rate of the fluid in the reduced portion is increased, the determined values can also be used for designing of the maximum hourly sewage.

Moreover, although the pipe diameter can be reduced concentrically with the pipe axis, slug flow formation by gas-liquid mixing is more likely to be formed by use of a shape having an opening provided in the pipe bottom. The same effect can be obtained by providing a partition in a part of the pipe to limit the flow rate. In this case, it is similarly more effective to provide the partition on the pipe top side.

According to the present invention, the check valve is provided so as to be positioned on the downstream side of the automatic suction device in a part of the pipe line.

Thus, the check valve prevents the backflow of the fluid even if the inversion phenomenon occurs, in which the degree of vacuum on the downstream side is reduced by blocking the pipe line and the degree of vacuum on the upstream side is increased. Thus, the fluid can be more efficiently transferred.

Hence, it is possible to obtain a pipe line which enables the fluid to be transferred more stably.

According to the present invention, when the degree of vacuum inside the pipe line is reduced, the atmosphere is introduced into the pipe line from the outside of the pipe line by the automatic suction device provided at the end of the uppermost stream side of the pipe line.

Thus, even if the air lock is caused by the sewage inside the pipe line, the air lock portion is swept away by the atmosphere introduced by the automatic suction device. Accordingly, the sewage inside the horizontally arranged pipe line is transferred toward the downstream side.

The fluid can also be allowed to pass through the pipe line at once and transferred. Thus, the transfer efficiency can be improved.

### INDUSTRIAL APPLICABILITY

The present invention is applicable to a system capable of transferring a fluid discharged from a house or a factory through a pipe line, and of collecting the fluid, using a pressure difference with the atmospheric pressure that is obtained by setting inside of the pipe line in a vacuum state.

## Claims

1. A vacuum fluid transfer system which transfers a fluid using a pressure difference occurred by setting inside of a pipe line to vacuum, **characterized by** comprising:
an automatic suction device for introducing atmosphere into the pipe line from outside of the pipe line when a degree of vacuum inside the pipe line is reduced to not higher than a predetermined value, and
**characterized in that** the pipe line includes a horizontally arranged portion.

2. The vacuum fluid transfer system according to claim 1, **characterized in that** a collecting tank is connected to a part of the pipe line, and has a vacuum valve provided therein, which is opened to introduce atmosphere, when a fluid stored in the collecting tank reaches a certain amount to transfer the fluid in the collecting tank through the pipe line.

3. The vacuum fluid transfer system according to any one of claims 1 and 2, **characterized in that** a fluid accumulation part is provided, in which the fluid is accumulated by reduction in the degree of vacuum inside the pipe line, and a downstream side of the automatic suction device is positioned in the fluid accumulation part.

4. The vacuum fluid transfer system according to any one of claims 1 to 3, **characterized in that** the fluid accumulation part is provided in a branch pipe, which is branched off downward from the pipe line.

5. The vacuum fluid transfer system according to claim 4, **characterized in that** the branch pipe is provided in a Y-shaped pipe part having a branch pipe line which is branched off obliquely downward from the pipe line, and which is connected at an acute angle to the pipe line so as to allow a merging direction to follow a fluid passing direction in the pipe line.

6. The vacuum fluid transfer system according to any one of claims 1 to 5, **characterized in that** the fluid accumulation part is formed of any one of a pipe line including a horizontal portion, an upward gradient portion, a horizontal portion, a downward gradient portion and a horizontal portion, all of which are continuously provided, and a pipe line including a horizontal portion, a downward gradient portion, a horizontal portion, an upward gradient portion and a horizontal portion, all of which are continuously provided.

7. The vacuum fluid transfer system according to any one of claims 1 to 5, **characterized in that** the fluid accumulation part is a pocket part formed inside the pipe line by setting the pipe line to be convex in any one of the downward and the upward directions.

8. The vacuum fluid transfer system according to claim 6, **characterized in that** a lift of the same diameter formed by the horizontal portion, which is sandwiched between the upward gradient portion and the downward gradient portion, and the horizontal portion, which is behind the downward gradient portion, is zero.

9. The vacuum fluid transfer system according to claim 7, **characterized in that** a lift of the same diameter in the pocket part is zero.

10. The vacuum fluid transfer system according to any one of claims 1 to 5, **characterized in that** the fluid accumulation part is formed by partially reducing a diameter of the pipe line.

11. The vacuum fluid transfer system according to any one of claims 1 to 10, **characterized in that** a check valve is provided in a part of the pipe line, the check valve being positioned on the downstream side of the automatic suction device to prevent a backflow of the fluid by blocking the pipe line even if an inversion phenomenon occurs, in which the degree of vacuum on the downstream side is reduced, and in which a degree of vacuum on an upstream side is increased.

12. The vacuum fluid transfer system according to any one of claims 1 to 11, **characterized in that** the automatic suction device is provided at an end portion on an uppermost stream side of the pipe line.
